# EUROPÄISCHE PATENTANMELDUNG

(11) **EP 3 572 557 A1**
(43) Veröffentlichungstag der Anmeldung: **27.11.2019**
(21) Anmeldenummer: 18173604.2
(22) Anmeldetag: 22.05.2018
(51) Int. Cl.: C25B 1/04, C25B 15/08

(54) **ELEKTROLYSEVORRICHTUNG UND VERFAHREN ZUM BETREIBEN DER ELEKTROLYSEVORRICHTUNG**

(71) Anmelder: Siemens Aktiengesellschaft, 80333 München (DE)
(72) Erfinder: Wolf, Erik, 91341 Röttenbach (DE); Reiner, Andreas, 91083 Baiersdorf (DE)

(57) **Zusammenfassung**

Die Erfindung betrifft eine Elektrolysevorrichtung zum elektrochemischen Zerlegen von Wasser mit einer Kühlvorrichtung und ein Verfahren zum Betreiben der Elektrolysevorrichtung mit Kühlvorrichtung. Die Elektrolysevorrichtung umfasst wenigstens eine Elektrolysezelle mit wenigstens einer ersten Eingangsöffnung für einen Eduktstrom und mit wenigstens einer ersten Ausgangsöffnung für einen ersten Produktstrom. Sie umfasst weiterhin wenigstens eine Kühlvorrichtung, wobei die Kühlvorrichtung ausgebildet ist, den ersten Produktstrom direkt zu kühlen, und die Kühlvorrichtung mit der ersten Ausgangsöffnung über eine erste Leitung verbunden ist, und wobei die erste Kühlvorrichtung ein elektrisch betriebenes Kühlaggregat, ein Wärmetauscher oder ein Radiator ist.

## Beschreibung

Die Erfindung betrifft eine Elektrolysevorrichtung zum elektrochemischen Zerlegen von Wasser mit einer Kühlvorrichtung und ein Verfahren zum Betreiben der Elektrolysevorrichtung mit Kühlvorrichtung.

Die Nachfrage nach Strom schwankt im tageszeitlichen Verlauf stark. Auch die Stromerzeugung schwankt mit zunehmendem Anteil an Strom aus erneuerbaren Energien während des Tagesverlaufs. Um ein Überangebot an Strom in Zeiten mit viel Sonne und starkem Wind bei niedriger Nachfrage nach Strom ausgleichen zu können, benötigt man regelbare Kraftwerke oder Speicher, um diese Energie zu speichern.

Eine der derzeitig angedachten Lösungen ist das Umwandeln von elektrischer Energie in Wertprodukte, die insbesondere als Plattformchemikalien oder Synthesegas, welches Kohlenstoffmonoxid und Wasserstoff umfasst, dienen können. Eine mögliche Technik zur Umwandlung der elektrischen Energie in Wertprodukte stellt die Elektrolyse dar.

Die Elektrolyse von Wasser zu Wasserstoff und Sauerstoff stellt eine im Stand der Technik bekannte Methode dar. Der Eduktstrom der Wasserelektrolyse sollte entsalzenes Wasser darstellen. Die Elektrolyse findet dabei üblicherweise in Elektrolysezellen statt, wobei mehrere Elektrolysezellen zu einem Modul zusammengefasst sein können. Eine Vielzahl von Elektrolysezellen beziehungsweise eine Mehrzahl von Modulen können zu einem sogenannten Elektrolysezellenstapel (englisch "stack") zusammengefasst sein. Weiterhin muss die in der Elektrolysezelle anfallende Abwärme abgeführt werden, sodass ein stabiles und robustes Kühlkonzept für die Elektrolyse benötigt wird.

Insbesondere in tropischen und subtropischen Regionen, in denen eine große Menge Sonnenenergie zur Verfügung steht, stellt das Kühlkonzept eine Herausforderung dar. Die Abwärme der Elektrolyse fällt typischerweise in einem Temperaturbereich zwischen 60 °C und 100 °C, insbesondere zwischen 60 °C und 80 °C, an, was eine Kühlung bei Umgebungstemperaturen von bis zu 50 ° C nachteilig erschwert, da die Temperaturdifferenz zwischen der Wärmequelle Elektrolyse und der Umgebungsluft so gering ist, dass nachteilig sehr große Wärmetauscher mit hohem Energiebedarf und hohen Investitionskosten benötigt werden. Weiterhin werden große Volumenströme an Kühlmedien bei diesen Temperaturen benötigt, was nachteilig einen hohen Energieverbrauch bei Pumpen und Gebläsen zur Folge hat.

Im Stand der Technik der Druck-Elektrolyse wird zunächst die Abwärme der Elektrolyse mit einem Wärmetauscher auf ein flüssiges Kühlmedium übertragen, welches nicht unter Druck steht. Dieses Kühlmedium wird daraufhin in einen Luftkühler geleitet, in dem es abkühlt. Nachteiligerweise muss die geringe Temperaturdifferenz zwischen der Wärmequelle Elektrolyse und der Umgebungsluft bei diesem Kühlprozess zum einen für das Übertragen der Wärme von der Elektrolyse auf das flüssige Kühlmedium und für das Übertragen der Wärme von dem flüssigen Kühlmedium auf die Umgebungsluft ausreichen. Auch hier sind nachteilig sehr große Wärmetauscher nötig, um die Elektrolyse ausreichend kühlen zu können.

Aufgabe der vorliegenden Erfindung ist es daher, ein Verfahren und eine Vorrichtung anzugeben, welche ein energieeffizientes Kühlen der Elektrolyseeinheit, insbesondere in heißen Klimaregionen, ermöglicht.

Die Aufgabe wird durch eine Elektrolysevorrichtung gemäß Anspruch 1 und einem Verfahren zum Betreiben einer Elektrolysevorrichtung gemäß Anspruch 6 gelöst.

Die Elektrolysevorrichtung umfasst erfindungsgemäß wenigstens eine Elektrolysezelle mit wenigstens einer ersten Eingangsöffnung für einen Eduktstrom und mit wenigstens einer ersten Ausgangsöffnung für einen ersten Produktstrom. Sie umfasst weiterhin wenigstens eine Kühlvorrichtung, wobei die Kühlvorrichtung ausgebildet ist, den ersten Produktstrom direkt zu kühlen, und die Kühlvorrichtung direkt mit der ersten Ausgangsöffnung über eine erste Leitung verbunden ist. Die Kühlvorrichtung ist ein elektrisch betriebenes Kühlaggregat, ein Wärmetauscher oder ein Radiator. Der Wärmestrom kann dann an den Untergrund, in ein Gewässer oder an die Umgebung oder eine Kombination der genannten Wärmesenken abgegeben werden.

Das erfindungsgemäße Verfahren zum Betreiben einer Elektrolysevorrichtung umfasst zunächst das Bereitstellen wenigstens einer Elektrolysezelle mit einer ersten Eingangsöffnung für einen ersten Eduktstrom und mit einer ersten Ausgangsöffnung für einen ersten Produktstrom. Weiterhin wird eine erste Kühlvorrichtung bereitgestellt, wobei die Kühlvorrichtung ein elektrisch betriebenes Aggregat, ein Wärmetauscher, ein Radiator, ein Trockenkühlturm oder ein Nasskühlturm ist. Der Wärmestrom kann dann an den Untergrund, an ein Gewässer, direkt an ein Kühlmedium oder eine Kombination der genannten Wärmesenken abgegeben werden. Anschließend wird in der Elektrolysezelle aus dem ersten Eduktstrom der erste Produktstrom hergestellt. Der erste Produktstrom wird dann wenigstens teilweise in die Kühlvorrichtung geführt. Dort erfolgt das Kühlen des ersten Produktstroms in der Kühlvorrichtung.

Dadurch, dass der aus der Elektrolysezelle kommende erste Produktstrom direkt in der Kühlvorrichtung gekühlt wird, wird der Einsatz eines zusätzlichen Kühlmittels vermieden. Dadurch sinken die Kosten, da Kosten für das Bereitstellen des Kühlmittels vorteilhaft wegfallen. Weiterhin arbeitet die Vorrichtung energieeffizient, da keine Wartungsintervalle für ein Kühlmittel notwendig sind. Ein Wärmeübergang von dem ersten Produktstrom auf ein Kühlfluid, welches dann erst gekühlt wird, wird vorteilhaft vermieden. Durch diesen nicht notwenigen, oder in anderen Worten eingesparten, Wärmeübergang auf das Kühlfluid wird eine effiziente Kühlung vorteilhaft möglich.

In einer vorteilhaften Ausgestaltung und Weiterbildung der Erfindung ist nach der Elektrolysevorrichtung und vor der Kühlvorrichtung ein Phasenseparator angeordnet. Der Produktstrom der Elektrolysevorrichtung ist zweiphasig. Vorteilhaft wird in dem Phasenseparator, der zwischen der Elektrolysevorrichtung und der Kühlvorrichtung angeordnet ist, das Produktgas von der Wasser umfassenden Flüssigphase getrennt. Anschließend wird nur die Flüssigphase gekühlt. Vorteilhaft wird demnach ein kleinerer Massenstrom gekühlt, wodurch weniger Energie verbraucht wird. Dies erhöht vorteilhaft die Energieeffizienz.

Für den Fall, dass die Elektrolysevorrichtung sowohl wasserstoffseitig als auch sauerstoffseitig einen Phasenseparator umfasst, können die jeweiligen Flüssigphasen, welche im Wesentlichen Wasser umfassen, vor der Kühlvorrichtung zusammengeführt werden. Vorteilhaft wird für beide Seiten (Wasserstoff und Sauerstoff) dann nur eine gemeinsame Kühlvorrichtung benötigt.

Alternativ kann die Kühlung der beiden Fluidkreisläufe der Elektrolysevorrichtung, d.h. wasserstoffseitig und sauerstoffseitig, getrennt durchgeführt werden. Die Protonen-Austausch-Membran (engl.: "Proton Exchange Membrane", PEM), welche in der Elektrolysevorrichtung die Anodenseite von der Kathodenseite trennt, ermöglicht es, dass Wasser elektrochemisch von der Sauerstoff-Seite auf die Wasserstoff-Seite übergehen kann, so dass es zu einem Wasserdefizit auf der Anodenseite, also der Sauerstoff-Seite käme, würde kein Transfer von Wasser zwischen den beiden Räumen der Elektrolysevorrichtung stattfinden. Demnach wird bei einer getrennten Kühlung der beiden Seiten, ein Wasserstransfer von der Wasserstoffseite zur Sauerstoffseite durchgeführt.

In einer weiteren vorteilhaften Ausgestaltung und Weiterbildung der Erfindung ist nach dem Phasenseparator oder nach der Elektrolysezelle eine Entspannungsvorrichtung angeordnet. Insbesondere für die Druckelektrolyse, die bei hohen Drücken von größer als 5 bar betrieben wird, ist es vorteilhaft, den Flüssigkeitsdruck der Wasser umfassenden Flüssigphase des Produktstroms nach dem Phasenseparator abzubauen, um nicht die gesamte Kühlvorrichtung auf den hohen Systemdruck auslegen zu müssen. Das Durchführen der Kühlung bei atmosphärischem Druck ist vorteilhaft mit einer einfach aufgebauten Kühlvorrichtung und somit kosteneffizient möglich. Die bei dem Druckabbau in der Flüssigkeit gelösten Gase werden bei Entspannen freigesetzt und müssen aus der Entspannungsvorrichtung abgeführt werden.

In einer weiteren vorteilhaften Ausgestaltung und Weiterbildung der Erfindung umfasst der Eduktstrom Wasser. Der erste Produktstrom umfasst Wasserstoff. Ein zweiter Produktstrom umfasst Sauerstoff. Typischerweise finden sich im ersten Produktstrom auch Spuren von Sauerstoff und im zweiten Produktstrom auch Spuren von Wasserstoff.

In einer vorteilhaften Ausgestaltung und Weiterbildung der Erfindung ist eine zweite Kühlvorrichtung mit der ersten Kühlvorrichtung verbunden. Insbesondere umfasst die zweite Kühlvorrichtung einen Kühlturm, insbesondere einen Trockenkühlturm oder einen Nasskühlturm, zum Vorkühlen des ersten Produktstroms vor der ersten Kühlvorrichtung. Vorteilhaft ermöglicht der Einsatz eines Kühlturms zusätzlich, die Temperatur der Umgebungsluft, welche normalerweise unterhalb der Betriebstemperatur der Elektrolyse von ungefähr 60 °C liegt, zum Kühlen zu nutzen.

Besonders vorteilhaft wird der Kühlturm mit Wasser aus der Elektrolysezelle betrieben. Es kann sich dabei insbesondere um das Edukt Wasser handeln oder um nicht reagiertes Wasser aus dem Produktstrom. Das Verwenden des Wassers erhöht vorteilhaft die Effizienz der gesamten Elektrolysezelle, da auf das Bereitstellen eines zusätzlichen Kühlmediums für die erste Kühlvorrichtung verzichtet werden kann. Weiterhin vereinfacht sich der Aufbau der Elektrolyseeinheit vorteilhaft, da weniger Apparate eingesetzt werden.

In einer weiteren vorteilhaften Ausgestaltung und Weiterbildung der Erfindung strömt der erste Produktstrom mit atmosphärischem Druck aus der Elektrolysezelle. Vorteilhaft ist es dann möglich, den ersten Produktstrom ohne einen Druckausgleich in die erste Kühlvorrichtung zu führen. Dies vereinfacht vorteilhaft den Aufbau der Elektrolysezelle mit der Kühlvorrichtung.

Weitere Merkmale, Eigenschaften und Vorteile der vorliegenden Erfindung ergeben sich aus der nachfolgenden Beschreibung unter Bezugnahme auf die beiliegende Figuren. Darin zeigen die Figuren schematisch:
- Figur 1: Eine Elektrolyseeinrichtung mit einem ersten und einem zweiten Wärmetauscher;
- Figur 2: Eine Elektrolyseeinrichtung mit einem gemeinsamen Wärmetauscher.

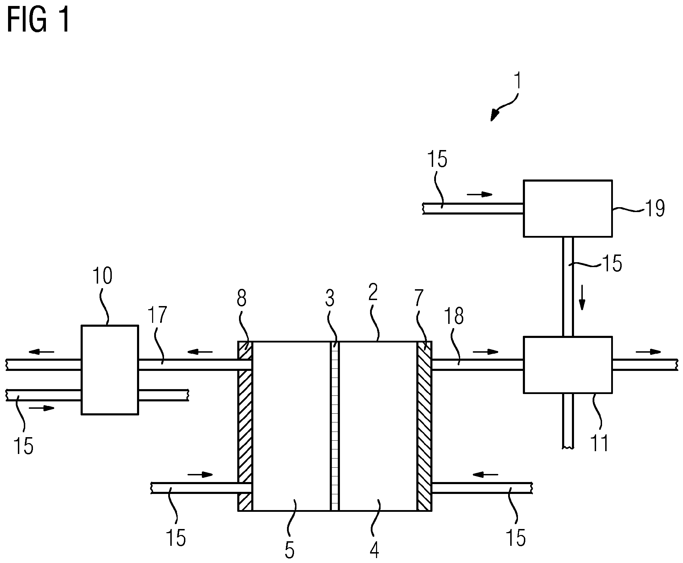

Figur 1 zeigt eine Elektrolyseeinrichtung 1 zur Elektrolyse von Wasser umfasst wenigstens eine Elektrolysezelle 2. Die Elektrolysezelle 2 umfasst einen Anodenraum 4 mit einer Anode 7. Sie umfasst weiterhin einen Kathodenraum 5 mit einer Kathode 8. Der Anodenraum 4 ist vom Kathodenraum 5 mittels einer Protonenaustauschmembran 3 getrennt. Der Anodenraum 4 ist geeignet, Wasser aufzunehmen und an der Anode 7 zu einem zweiten Produkt 17 umfassend Sauerstoff zu oxidieren. Der Kathodenraum 5 ist geeignet, Wasser aufzunehmen und an der Kathode 8 zu einem ersten Produkt 18 umfassend Wasserstoff zu reduzieren. In diesem Beispiel erfolgt das Zerlegen von Wasser 15 zu Sauerstoff 18 und Wasserstoff 17 bei atmosphärischem Druck.

Vorteilhaft wird das erste Produkt 17, umfassend Wasserstoff, durch einen ersten Wärmetauscher 10 direkt geführt. Vorteilhaft wird der Wärmetauscher 10 im Gegenstrom mit einem Kühlmedium betrieben. Das Kühlmedium ist insbesondere Wasser 15. Vorteilhaft wird somit das erste Produktgas 17 umfassend Wasserstoff und nicht umgesetztes Wasser direkt in dem Wärmetauscher 10 gekühlt. Die Kühlvorrichtung umfasst insbesondere (hier nicht dargestellt) auch Temperaturmessstellen, eine Bypass-Leitung mit einem Drei-Wege-Ventil, das in Abhängigkeit der Temperatur einen Anteil des zu kühlenden Produktstroms der Kühlvorrichtung zuführt, eine Zirkulationspumpe, ein Ausdehnungsgefäß und/oder ein Entspannungsgefäß mit Entgasungseinrichtungen.

Vorteilhaft wird durch das direkte Führen des Produktstroms in den Wärmetauscher vermieden, weitere Kühlvorrichtungen, welche bei einem indirekten Kühlen erforderlich wären, einzusetzen. Dies vereinfacht den Aufbau der Elektrolyseeinrichtung 1. Weiterhin wird die Effizienz der Kühlung erhöht, da der erste Produktstrom 17 vorteilhaft direkt gekühlt wird. Analog ist es möglich, den zweiten Produktstrom 18 umfassend Sauerstoff direkt in einem zweiten Wärmetauscher 11 zu kühlen.

In diesem Beispiel ist der zweite Wärmetauscher 11 direkt mit einem Kühlturm 19 verbunden. Hierbei handelt es sich um einen Nasskühlturm, welcher mit Wasser gekühlt wird. Das vorgekühlte Wasser wiederum kühlt dann den zweiten Wärmetauscher. Dadurch, dass das zweite Produkt 18 nicht indirekt gekühlt wird, sondern direkt in einen zweiten Wärmetauscher 11 geführt wird, ist die Kühlung besonders effizient. Dies ist insbesondere dort wichtig, wo die Umgebungstemperaturen sehr hoch sind, insbesondere in tropischen und subtropischen Gebieten.

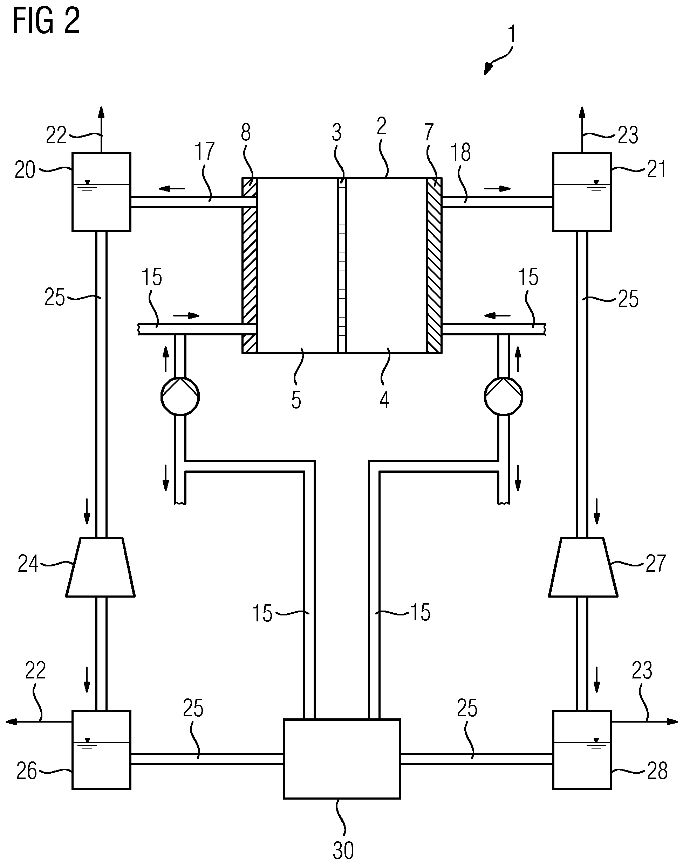

Es ist alternativ zu dem in Figur 1 gezeigten Aufbau ebenso möglich, dass der erste Produktgasstrom 17 und zweite Produktgasstrom 18 direkt in denselben Wärmetauscher geführt werden. Dies zeigt Figur 2. Die Elektrolysevorrichtung 1 wird in diesem Beispiel bei einem höheren Druck von 5 bar betrieben. Der Aufbau der Elektrolysezelle 2 entspricht dabei dem Aufbau der Elektrolysezelle des ersten Beispiels in Figur 1. Kathodenseitig verlässt das erste Produkt 17 die Elektrolysezelle 2 und wird in eine erste Gasabtrennvorrichtung 20 geführt. Der Wasserstoff 22 verlässt dann die Elektrolysevorrichtung 1. Das warme Wasser 25 wird anschließend in einer ersten Entspannungsvorrichtung 24 oder in anderen Worten in einem Druckminderer von im Wesentlichen 5 bar auf atmosphärischen Druck entspannt. Der dabei aus der Flüssigphase freigesetzte Wasserstoff 22 verlässt anschließend die Elektrolysevorrichtung 1. Analog wird das zweite Produkt 18 umfassend Sauerstoff in einen zweiten Gasabscheider 23 geführt und anschließend in einem Druckminderer 27 auf atmosphärischen Druck entspannt. Der bei der Entspannung freigesetzte Sauerstoff 23 verlässt die Elektrolysevorrichtung 1. Das warme Wasser 25 wird in den gemeinsamen Wärmetauscher 30 geführt und dort vermischt. Anschließend kann das Wasser wenigstens teilweise wieder in die Elektrolysezelle 2 zurückgeführt werden. Vorher wird es mittels Pumpen oder Verdichtern wieder auf den Betriebsdruck von 5 bar verdichtet. Je nach Reinheit des Wassers, kann es sinnvoll sein, das Wasser vor dem Rückführen, insbesondere mittels eines Ionen-Austausch-Harzes, zu reinigen. Vorteilhaft ist in diesem Ausführungsbeispiel nur ein Wärmetauscher nötig. Das vereinfacht den Aufbau der Elektrolyseeinheit 1 vorteilhaft.

### Bezugszeichenliste

- 1: Elektrolyseeinrichtung
- 2: Elektrolysezelle
- 3: Protonenaustauschmembran
- 4: Anodenraum
- 5: Kathodenraum
- 7: Anode
- 8: Kathode
- 10: erster Wärmetauscher
- 11: zweiter Wärmetauscher
- 15: Wasser
- 17: erster Produktgasstrom
- 18: zweiter Produktgasstrom
- 20: erste Gastrennvorrichtung
- 21: zweite Gastrennvorrichtung
- 22: Wasserstoffstrom
- 23: Sauerstoffstrom
- 24: erste Entspannungsvorrichtung
- 25: warmes Wasser
- 26: dritte Gastrennvorrichtung
- 27: zweite Entspannungsvorrichtung
- 28: vierte Gastrennvorrichtung
- 30: gemeinsamer Wärmetauscher

## Patentansprüche

1. Elektrolysevorrichtung (1) zum elektrochemischen Zerlegen von Wasser umfassend:
- wenigstens eine Elektrolysezelle (2) mit wenigstens einer ersten Eingangsöffnung für einen Eduktstrom (15) und mit wenigstens einer ersten Ausgangsöffnung für einen ersten Produktstrom (17),
- wenigstens eine Kühlvorrichtung (10, 11), wobei die Kühlvorrichtung (10, 11) ausgebildet ist, den ersten Produktstrom (17) direkt zu kühlen, und die Kühlvorrichtung (10, 11) mit der ersten Ausgangsöffnung über eine erste Leitung verbunden ist, und wobei die erste Kühlvorrichtung (10, 11) ein elektrisch betriebenes Kühlaggregat, ein Wärmetauscher oder ein Radiator ist.

2. Elektrolysevorrichtung (1) nach Anspruch 1, wobei zwischen der Elektrolysezelle (2) und der ersten Kühlvorrichtung (10, 11) eine erste Gasabscheidevorrichtung (20) zum Abscheiden des Wasserstoffs (22) angeordnet ist.

3. Elektrolysevorrichtung (1) nach Anspruch 2, mit einer zweiten Ausgangsöffnung für einen zweiten Produktstrom (18) und einer zweiten Gasabscheidevorrichtung (21) zum Abscheiden des Sauerstoffs (23), wobei aus der ersten Gasabscheidevorrichtung (20) und der zweiten Gasabscheidevorrichtung (21) ein Flüssigkeitstrom umfassend Wasser in die erste Kühlvorrichtung führbar ist, wobei die erste Kühlvorrichtung als eine gemeinsame Kühlvorrichtung (30) zum Kühlen des Flüssigkeitsstroms ausgebildet ist.

4. Elektrolysevorrichtung (1) nach einem der vorhergehenden Ansprüche, wobei eine zweite Kühlvorrichtung (19) mit der ersten Kühlvorrichtung (11) verbunden ist.

5. Elektrolysevorrichtung (1) nach Anspruch 4, wobei die zweite Kühlvorrichtung (19) einen Kühlturm umfasst.

6. Verfahren zum Betreiben einer Elektrolysevorrichtung (1) zum Zerlegen von Wasser mit folgenden Schritten:
- Bereitstellen wenigstens einer Elektrolysezelle (2) mit einer ersten Eingangsöffnung für einen ersten Eduktstrom (15) und mit wenigstens einer ersten Ausgangsöffnung für einen ersten Produktstrom (17),
- Bereitstellen wenigstens einer ersten Kühlvorrichtung (10, 11), wobei die Kühlvorrichtung (10, 11) ein elektrisch betriebenes Kühlaggregat, ein Wärmetauscher oder ein Radiator ist,
- Herstellen des ersten Produktstroms (17) aus dem ersten Eduktstrom (15) in der Elektrolysezelle (2),
- Führen des ersten Produktroms (17) wenigstens teilweise in die Kühlvorrichtung (10, 11) und direktes Kühlen des ersten Produktstroms (17) in der Kühlvorrichtung (10, 11).

7. Verfahren nach Anspruch 6, wobei der Eduktstrom (15) Wasser umfasst und der erste Produktstrom (17) Wasserstoff (22) und ein zweiter Produktstrom (18) Sauerstoff (23) umfasst.

8. Verfahren nach einem der Ansprüche 6 oder 7, wobei der erste Produktstrom (17) mit atmosphärischem Druck aus der Elektrolysezelle (2) strömt.

9. Verfahren nach einem der Ansprüche 6 oder 7, wobei der erste Produktstrom (17) mit einem Druck von wenigstens 5 bar aus der Elektrolysezelle (2) strömt.

10. Verfahren nach Anspruch 9, wobei der erste und/oder zweite Produktstrom (17, 18) nach der Elektrolysezelle in einer Entspannungsvorrichtung (24, 27) entspannt wird.

11. Verfahren nach Anspruch 10, wobei der erste und/oder zweite Produktstrom (17, 18) nach der Elektrolysezelle auf atmosphärischen Druck entspannt wird.

12. Verfahren nach einem der Ansprüche 6 bis 11, wobei der erste und/oder zweite Produktstrom (17, 18) nach der Elektrolysezelle (2) in einer Gasabscheidevorrichtung (20, 21) in einen Gasstrom und einen Flüssigkeitsstrom (25) aufgetrennt werden und der Flüssigkeitsstrom in die erste Kühlvorrichtung (10, 11) geführt wird.

13. Verfahren nach Anspruch 12, wobei die Flüssigkeitsströme (25) nach den Gasabscheidevorrichtungen (20, 21) in eine gemeinsame erste Kühlvorrichtung (30) geführt werden.

14. Verfahren einem der Ansprüche 6 bis 13, wobei die erste Kühlvorrichtung (10, 11) mit einer zweiten Kühlvorrichtung (19) verbunden wird.
